Europäisches Patentamt

European Patent Office

Office européen des brevets

(11) Publication number: **0 171 889**
**A1**

## EUROPEAN PATENT APPLICATION

(21) Application number: **85304220.8**

(22) Date of filing: **13.06.85**

(51) Int. Cl.⁴: **A 01 G 27/00**

(30) Priority: **15.06.84 GB 8415308**
**29.08.84 GB 8421839**

(43) Date of publication of application:
**19.02.86 Bulletin 86/8**

(84) Designated Contracting States:
**NL**

(71) Applicant: **Fong, Hanry**
**3rd Floor, Flat 12 82 Fu Yan Street**
**Kwun Tong Kowloon(HK)**

(72) Inventor: **Fong, Hanry**
**3rd Floor, Flat 12 82 Fu Yan Street**
**Kwun Tong Kowloon(HK)**

(74) Representative: **Jackson, Peter Arthur et al,**
**GILL JENNINGS & EVERY 53-64 Chancery Lane**
**London WC2A 1HN(GB)**

(54) **Plant container.**

(57) A plant container comprises a water reservoir (8) between an inner wall (1), which accommodates a plant (42), and an outer wall (2). By moving a sealing element (34), by means of a finger piece (32) from beneath an opening (38), water can leave the otherwise sealed reservoir and partially fill a dish (3), until the water level in the dish closes the opening (38). The water in the dish is sucked up through a sponge (40) into growing medium (41) in the inner wall (1). The water level in the reservoir is indicated by a sight glass (15) and a coloured float (17) which is visible through a lens portion of the sight glass. When the reservoir needs replenishing, the closure element (34) is moved to close the opening (38), and water is poured in through a neck (13) after removal of a closure cap (14).

./...

Croydon Printing Company Ltd.

Fig.2.

0171889

HANRY FONG                                    Ref: 50/2461/02

PLANT CONTAINER

It is commonplace for plant pots, containing growing plants, to have an aperture in their bottom, and to be stood in a dish of water, so that the water may be drawn up through the aperture into the soil within the pot for nourishing the plant. However the level of water must not be too high around the bottom of the pot, otherwise the water will rise to the same level within the pot and the soil within the pot will become undesirably saturated. It is consequently necessary continually to monitor the level of water in the dish and repeatedly to replenish the dish with small quantities of water as the water is used up by being drawn into the pot, or by evaporation.

It be believed to be known in the field of commercial horticulture, where plants are grown in quantity in a greenhouse, for a large number of plant pots to be stood in a common dish-like tray, in which a shallow pool of water is maintained at a substantially constant level by means of an otherwise closed reservoir of water, having an outlet which opens just beneath the upper surface of the pool of water. This utilizes the well known scientific principle that when a bottle full of water is inverted and its neck is placed below the exposed upper surface of a body of water in a bowl, the water does not flow out of the bottle into the bowl, owing to the atmospheric pressure acting on the surface of the water in the bowl. However, if the level of the water in the bowl drops below the neck of the bottle, so that air can enter the neck of the bottle and displace water in the bottle, water will flow out until the level of water in the bowl rises again to close the neck of the bottle.

The conventional commercial adaptation of this principle which is referred to above is inconvenient and unsightly for domestic use, for example with houseplants, and the object of the invention is to provide a plant container which utilizes the principle in a neat and compact manner.

In accordance with the present invention, a plant container comprises an annular inner wall which is arranged to contain a plant in a growing medium and which has a water inlet aperture adjacent to its bottom; an annular outer wall which surrounds the inner wall to provide between the walls an annular reservoir; a dish which is arranged to rest beneath the walls and which is capable of containing water up to a level above that of the aperture in the inner wall; the reservoir being provided adjacent to its top with a filling opening which is provided with a removable air-tight closure, and adjacent to its bottom with an outlet which is provided with a closure valve and which opens into the dish at a level at which water can be contained in the dish but above the level of the inner wall aperture.

With this arrangement the outer wall may give the appearance of the outer wall of a conventional plant container, particularly if the inner wall is flared in the upward direction so that the exposed surface of the medium in which a plant is growing extends substantially fully outwards to the upper periphery of the container. The casual observer would thus not appreciate that a comparatively large quantity of water is stored in the reservoir within the container and, provided that the closure valve is open, continually maintains in the dish a desirable level of water above the aperture into the inner wall, through which it may be sucked into the growing medium. As the water is used up and the level of water in the dish drops below the reservoir outlet, air can enter the reservoir through the outlet to displace more water which passes out of the outlet into the dish and raises the level again to close the outlet. When the reservoir itself needs replenishing, the closure valve will be moved to close the outlet, whereupon the removable closure for the filling inlet will be removed, and the reservoir refilled. After reclosing the filling opening by its closure, such as a screw cap, the closure valve is moved to its open position to place the interior of the reservoir again in communication with the dish. In the absence of the closure valve, removal of the filling inlet closure would subject the interior of the reservoir to atmospheric pressure and any water in the reservoir would flood out of the reservoir outlet and overflow the dish.

The level of water in the reservoir may be monitored by means of a float-operated indicator, which may be exposed in a transparent wall portion of the reservoir. When the reservoir contains sufficient water, the indicator will be held by the float in a raised visible position. However, when the level of water in the reservoir drops to a low level, at which replenishment of the reservoir is desirable, this is indicated by the float carrying the indicator downwards to a lower visible, or even invisible level. Alternatively or in addition a sight glass may be provided on the outer wall to give a visual indication of the water level in the reservoir.

The inner wall may itself act as a conventional plant pot, and contain the plant and soil or other growing medium directly. Alternatively, the inner wall may act as a plant pot holder and be arranged to receive a complementarily shaped plant pot which holds a plant and growing medium. In either case, the water will naturally pass through the inner wall aperture and rise to a level within the inner wall substantially the same as the level of water which is maintained in the dish. Provided that the growing medium either contained by the inner wall, or contained by a pot within the inner wall contacts the water, the water will be drawn up naturally through the growing medium. In the latter case the plant pot will have a conventional bottom aperture through which the water may pass into the pot.

The dish could be arranged to stand freely within a surrounding skirt or legs depending from the outer wall but preferably the inner and outer walls are carried on the dish.

An example of a plant container constructed in accordance with the present invention is illustrated in the accompanying drawings, in which:-

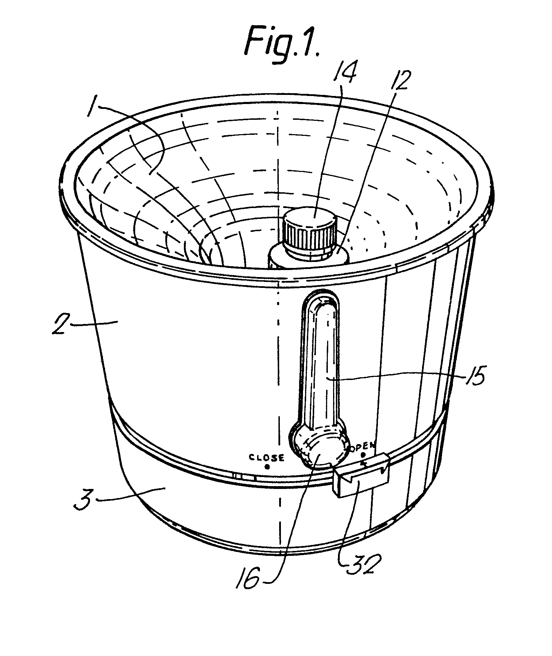

Figure 1 is a perspective view;

Figure 2 is a central vertical section through the container;

Figure 3 is a similar section through an inner wall component;

Figure 4 is a view taken on the line IV-IV in Figure 3;

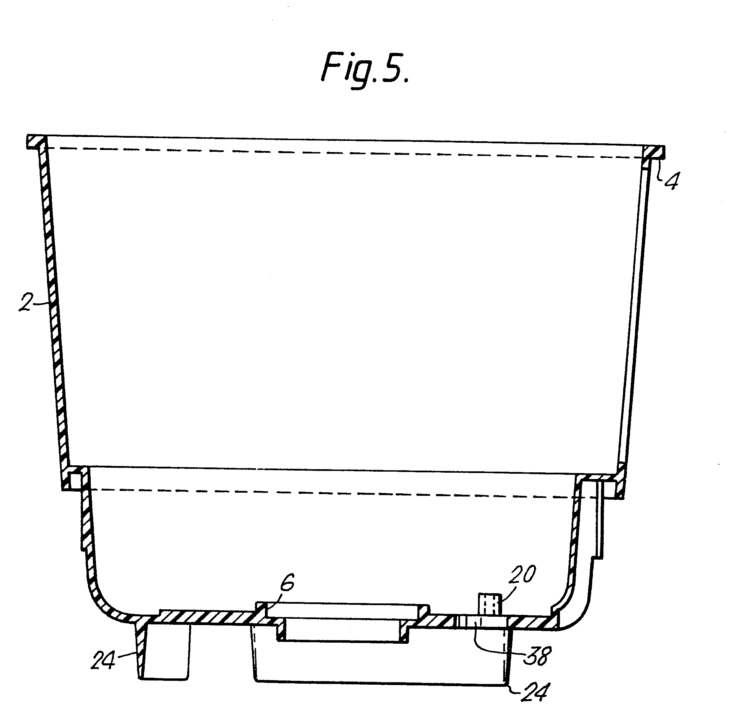

Figure 5 is a central vertical section through an outer wall component;

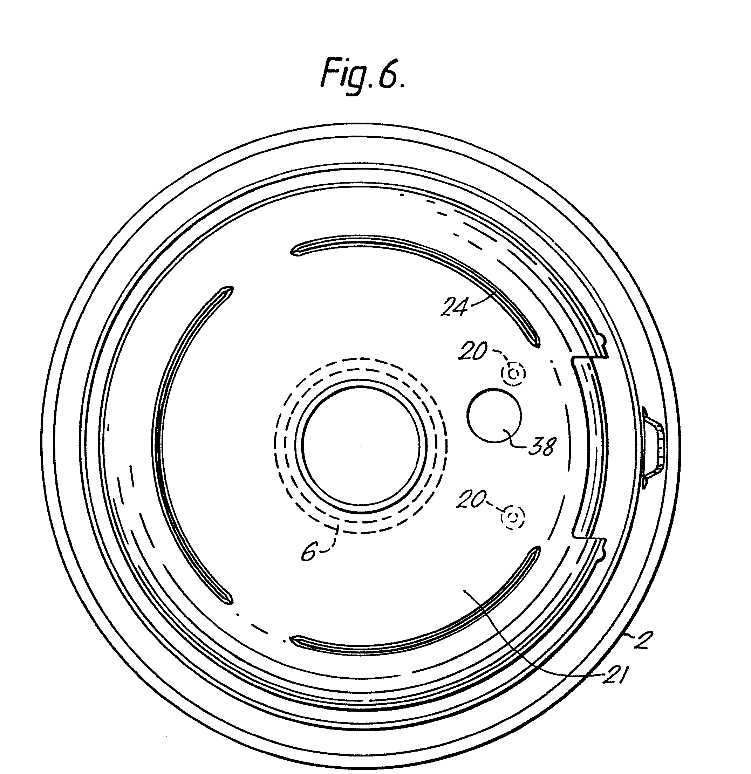

Figure 6 is an underneath plan of the outer wall component;

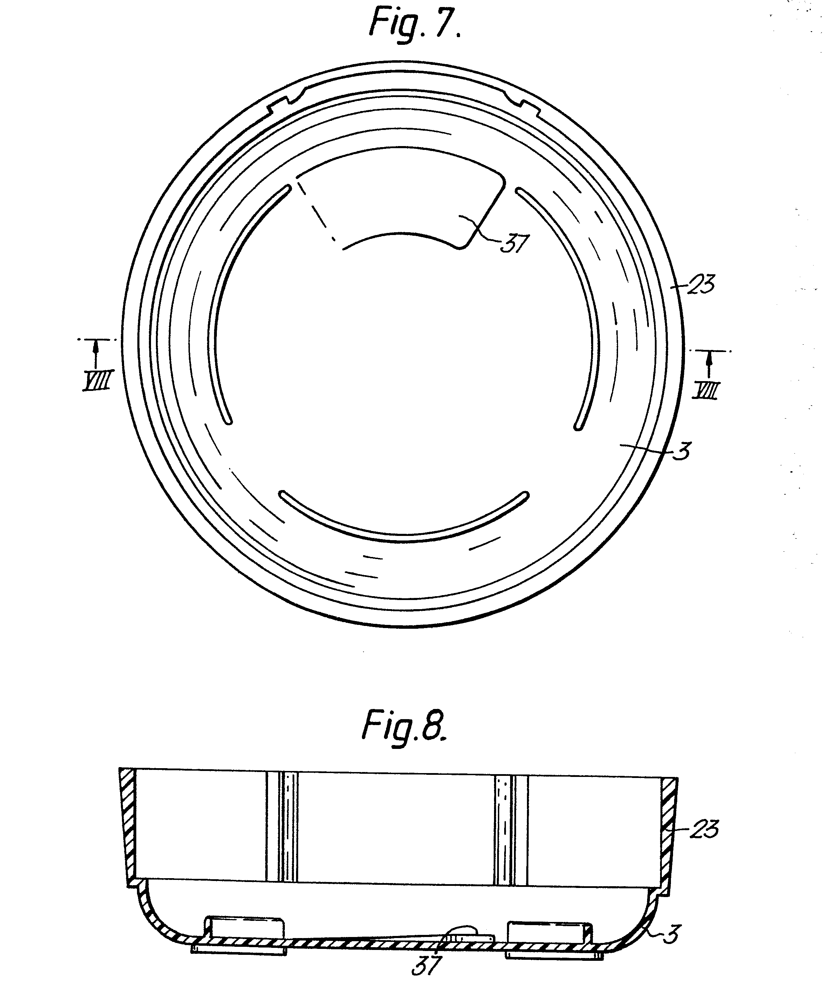

Figure 7 is a plan of a dish component;

Figure 8 is a diagrammatic vertical section through the dish component; and,

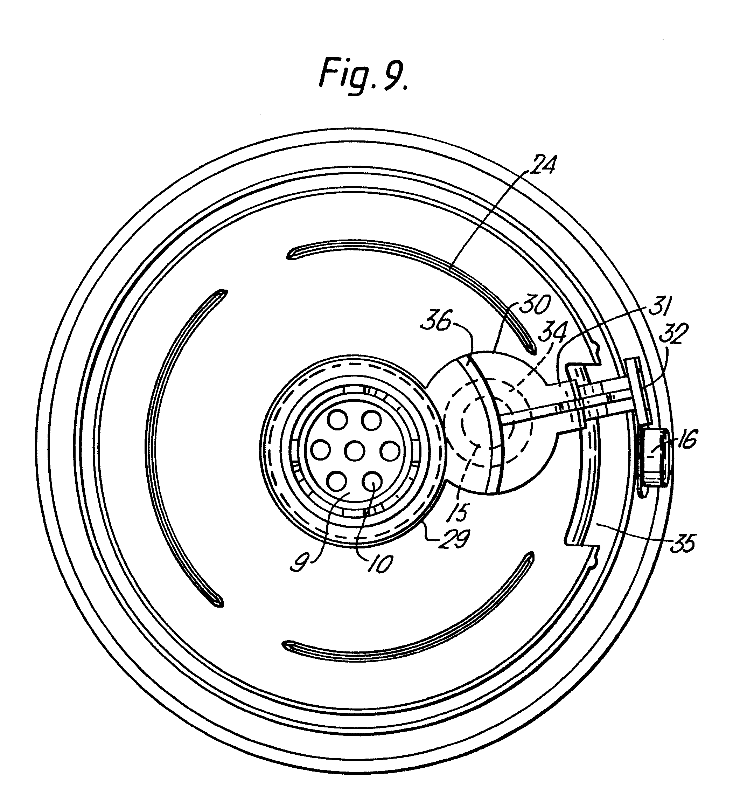

Figure 9 is an underneath plan of the container without the dish.

The main component parts of the container are all moulded from rigid plastics material and consist of an annular, upwardly flared, inner wall component 1, an annular outer wall component 2 and a dish 3. The components 1 and 2 are fused together at upper and lower positions, where an annular bead 4 on the outer wall 2 nests within an annular groove formed by an angular flange 5 on the inner wall 1, and where an angular flange 6 at the bottom of the outer wall 2 nests with complementary parts 7 at the bottom of the inner wall 1. This provides a sealable reservoir space 8 between the two walls.

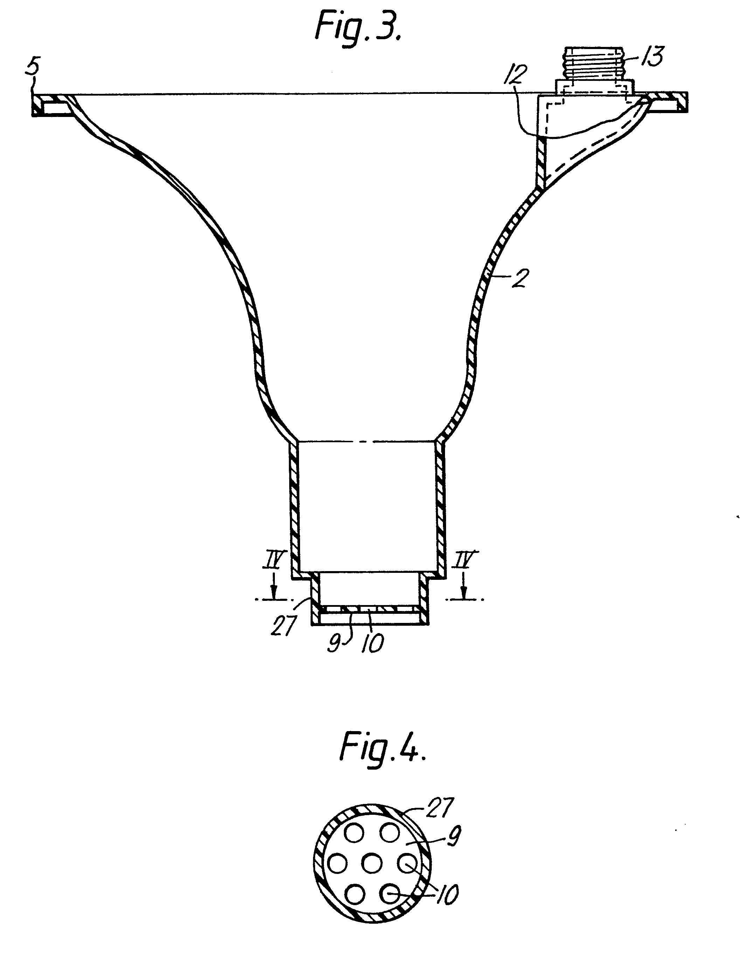

The interior of the inner wall 1 is also partially closed at the bottom by a cross web 9 provided, as shown in Figure 3, with a number of apertures 10. In addition the inner wall 1 is provided around an opening 11 with an integral boss 12 terminating in an externally screw threaded neck 13, which is arranged to receive a closure cap 14 for sealing the neck 13 and hence the opening 11 in an air-tight manner.

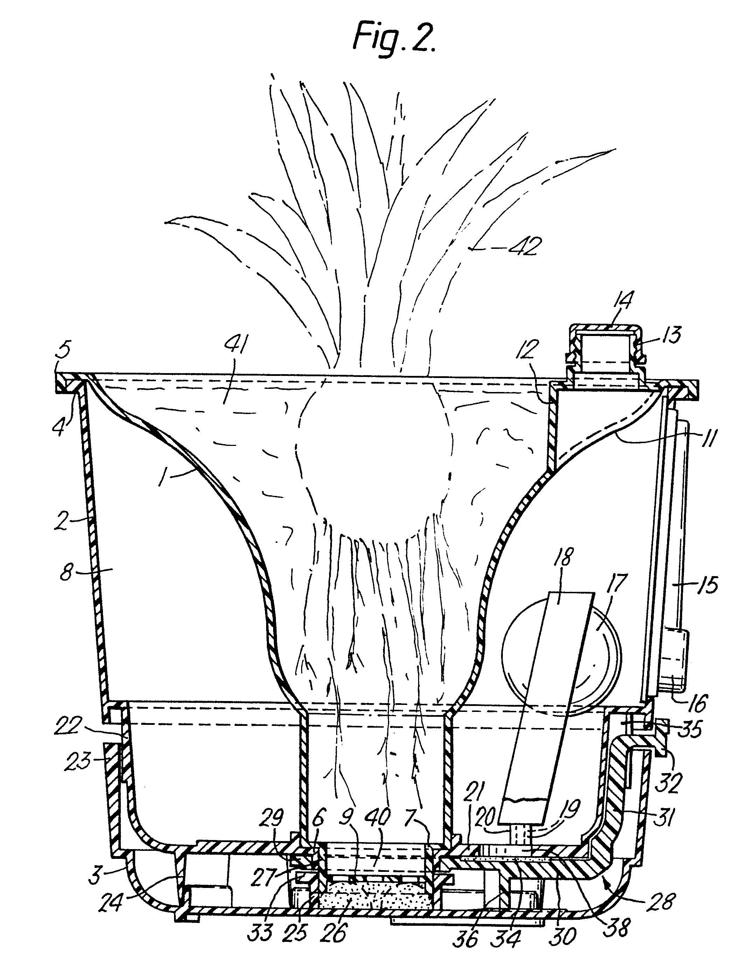

One side of the outer wall 2 has a vertical slot out through which projects a moulded plastics sight glass 15 incorporating, at its lower end, an integral lens 16. When the water in the reservoir 8 is level with the sight glass 15, the water enters the vertical channel formed on the inner surface of the sight glass and is visible through the sight glass. When the water is level with part of the sight glass, a light spherical float 17, similar to a table tennis ball, but coloured, e.g. green, will be visible through the lens 16 indicating a satisafactory level of water in the reservoir. The float is prevented from rising above the position shown in Figure 2, opposite the lens 16, by an inverted U-shaped plastics yoke 18, between the legs of which the float is freely movable. The yoke 18 is held in position with means of a spigot 19 projecting downwards from the lower end of each leg of the yoke and received in a complementary socket 20 provided on a flat base portion 21 of the outer wall 2. Thus when the level of water in the reservoir is acceptable, and

0171889

replenishment is not required, a green colour is seen through the lens 16 and when the level is just above the minimum acceptable level, the level is also visible in the sight glass 15. However, if the level of water in the reservoir falls below the minimum acceptable level, the float 17 drops with the water level into the lower part ofthe reservoir, where it is not clearly seen through the lens 16. The absence of the coloured indicator indicates to the user that replenishment is necessary.

The subassembly of the walls 1 and 2 rests in the dish 3 with a radially inwardly stepped lower portion 22 of the outer wall 2 within an upwardly projecting peripheral wall 23 of the dish 3, and arcuate feet 24 of the outer wall resting on the base of the dish.

An additional annular moulded plastics component 25 is rested in the centre of the dish and has arched shaped openings 26 in its peripheral wall. A downwardly projecting boss 27 forming the bottom of the inner wall component 1, and carrying the cross web 9, projects into the element 25. A further moulded plastics component 28 consists of a ring 29, a radially extending bulbous portion 30, and a further radially extending operating portion 31 which terminates in an exposed fingerpiece 32. The ring 29 is rotatable around the boss 27 and on a flange 33 projecting from the top of the element 25. The bulbous portion 30 and carries a soft plastics sealing disc 34 forming a closure member. The radially extending portion 31 is movable circumferentially within a double walled portion 35 of the outer wall 2. The component 28 also has a downwardly projecting arcuate leg 36 which works on a ramp 37 formed on the upper surface of the bottom wall of the dish 3. By manipulating the fingerpiece 32, the component 28 can be rotated through a small angle to and fro about the axis of the boss 27 to move the closure disc 34 between an "open" position in which an aperture 38 in the bottom part of the outer wall 2 is open, and a position in which the sealing disc 34 is clear of the aperture 38. When the component 28 is swung to the "close" position, the leg 36 rides up the ramp 37 to raise the sealing disc 34 into close sealing engagement with the wall 2 around the aperture 38 and improve the sealing action.

When the reservoir is to be refilled through the opening 11, the valve component 28 will be moved to the closed position and the cap 14 removed. After the reservoir has been filled, the cap 14 will be replaced, and the valve component 28 moved to the open position. The dish 3 will then fill with water up to the level of the underside of the bottom part of the outer wall 2, at which the opening 38 is effectively closed for the ingress into the reservoir of replacement air. This water level will be maintained in the dish and, via the arched openings 26 and apertures 10, at the same level in the bottom of the inner wall 1, which preferably contains a sponge 40, to prevent soil or other growing medium 41 within the inner wall 1 from blocking the apertures 10.

Figure 2 illustrated diagrammatically a plant 42 growing in the medium 41.

- 8 -                                        0171889

## CLAIMS

1. A plant container comprising an annular inner wall (1) which is arranged to contain a plant in a growing medium and which has a water inlet aperture (10) adjacent to its bottom; an annular outer wall (2) which surrounds the inner wall to provide between the walls an annular reservoir (8); a dish (3) which is arranged to rest beneath the walls (1,2) and which is capable of containing water up to a level above that of the aperture (10) in the inner wall; the reservoir being provided adjacent to its top with a filling opening (11) which is provided with a removable air-tight closure (14), and adjacent to its bottom with an outlet (38) which is provided with a closure valve (34) and which opens into the dish (3) at a level at which water can be contained in the dish but above the level of the inner wall aperture.

2. A container according to claim 1, further comprising a float-operated indicator (17), which may be exposed in a transparent wall portion (15) of the reservoir (8), to monitor the level of water in the reservoir.

3. A container according to claim 1 or claim 2, in which a sight glass (15) is provided on the outer wall (2) to give a visual inidcation of the water level in the reservoir (8).

4. A container according to claim 2 and claim 3, in which the sight glass (15) incorporates a lens (16), through which the float-operated indicator (17), which is coloured, is visible when the water level in the reservoir (8) is above a minimum acceptable level.

5. A container according to claim 4, in which the float and indicator are provided by a common ball (17).

6. A container according to claim 5, in which the ball (17) is movable within an inverted U-shaped yoke (18) which prevents it from rising above a level corresponding to the minimum acceptable water level in the reservoir (8).

7. A container according to any one of the preceding claims, in which the inner wall (1) is upwardly and outwardly flared and the filling opening (11) is provided by a screw threaded neck (13), fitted with a screw threaded cap closure (14), which projects upwardly from the inner wall adjacent to the outer periphery of the inner wall.

8. A container according to any one of the preceding claims, in which the inner wall (1) and the outer wall (2) are separately moulded components which have been assembled together by sealing them together at their upper and lower peripheries (4,5;6,7), the outer wall component (1) including a radially inwardly projecting base wall portion (21) in which the outlet (38) is formed, and the closure valve (34) comprising a closure element which is arranged to be swung to and fro beneath the base wall portion (21) to open and close the outlet.

9. A container according to claim 8, in which the closure element (34) is carried by a part (28) which is rotatable about a lower portion (27) of the inner wall (1) and has a manually operable finger piece (32) exposed at the outer wall (2).

- 10 -                                0171889

10. A container according to any one of the preceding claims, in which the inner and outer walls (1,2) rest in the dish (3).

Fig.1.

# Fig.2.

# Fig. 3.

# Fig. 4.

# Fig.5.

# Fig.6.

## Fig. 7.

## Fig.8.

0171889

Fig.9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CA-A-1 156 464 (ADLER) * Page 5, paragraph 1 - page 7, paragraph 3; figures 1,7 * | 1 | A 01 G 27/00 |
| A | | 3,7,10 | |
| Y | BE-A- 693 847 (BRASSEUR) * Page 2, last paragraph - page 4, paragraph 2; figures 1,2 * | 1 | |
| A | US-A-3 775 904 (PETERS) * Column 2, line 48 - column 4, line 11; figures 1,2 * | 1,8 | |
| A | FR-A-2 290 823 (SCHOCK) * Page 8, lines 22-35; figure 1 * | 2 | TECHNICAL FIELDS SEARCHED (Int. Cl.4) |
| A | US-A-4 198 784 (SUKERT) * Column 3, line 49 - column 5, line 58; figures 1,4 * | 9 | A 01 G |

The present search report has been drawn up for all claims

| Place of search | Date of completion of the search | Examiner |
|---|---|---|
| THE HAGUE | 09-09-1985 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82